(19) Europäisches Patentamt / European Patent Office / Office européen des brevets

(11) **EP 3 985 387 A1**

(12) **EUROPEAN PATENT APPLICATION**
published in accordance with Art. 153(4) EPC

(43) Date of publication:
**20.04.2022  Bulletin 2022/16**

(51) International Patent Classification (IPC):
***G01N 29/50*** (2006.01)

(21) Application number: **19932972.3**

(52) Cooperative Patent Classification (CPC):
**G01N 29/043; G01N 29/069; G01N 29/11; G01N 29/48; G01N 29/50;** G01N 2291/0234; G01N 2291/0258; G01N 2291/044

(22) Date of filing: **13.06.2019**

(86) International application number:
**PCT/JP2019/023485**

(87) International publication number:
**WO 2020/250378 (17.12.2020 Gazette 2020/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **JFE Steel Corporation**
**Tokyo 100-0011 (JP)**

(72) Inventors:
• **TERADA, Kazuki**
**Tokyo 100-0011 (JP)**

• **MATSUI, Yutaka**
**Tokyo 100-0011 (JP)**
• **OHTANI, Yoshinori**
**Tokyo 100-0011 (JP)**
• **MATSUMOTO, Minoru**
**Tokyo 100-0011 (JP)**

(74) Representative: **Grünecker Patent- und Rechtsanwälte**
**PartG mbB**
**Leopoldstraße 4**
**80802 München (DE)**

(54) **ULTRASOUND FLAW DETECTION METHOD, ULTRASOUND FLAW DETECTION DEVICE, MANUFACTURING EQUIPMENT LINE FOR STEEL MATERIAL, MANUFACTURING METHOD FOR STEEL MATERIAL, AND QUALITY ASSURANCE METHOD FOR STEEL MATERIAL**

(57)    An ultrasonic flaw detection method according to the present invention includes: a receiving step of receiving a plurality of flaw signals via an ultrasonic probe while changing a positional relation between an inspection material and the ultrasonic probe; a determining step of, in each positional relation between the inspection material and the ultrasonic probe, calculating a ratio of a received sound pressure of a flaw signal with respect to a received sound pressure of a flaw signal at a reference position as a received sound pressure ratio, and determining a combined width in an aperture synthesis process at each depth position of the inspection material based on the calculated received sound pressure ratio; and an inspecting step of inspecting the inside of the inspection material by executing the aperture synthesis process using the flaw signals according to the determined combined width.

FIG.1

EP 3 985 387 A1

**Description**

Field

The present invention relates to an ultrasonic flaw detection method, an ultrasonic flaw detection device, a manufacturing equipment line for a steel material, a manufacturing method for a steel material, and a quality assurance method for a steel material.

Background

An internal flaw of a round bar may become a starting point of a crack when a machine part made from the round bar is to be manufactured, and reduces the strength and life of the machine part after being manufactured. Thus, conventionally, ultrasonic flaw detection is performed on a round bar, and the internal flaw of the round bar has been evaluated. In the conventional ultrasonic flaw detection device for a round bar, a flaw on the entire surface of the round bar is detected by relatively moving a single ultrasonic probe for perpendicular and oblique angles along the circumference direction and the axis direction of the round bar. However, when an unfocused probe is used for the ultrasonic probe, an ultrasonic signal diffuses as the distance from the ultrasonic probe increases. Thus, the intensity of the ultrasonic signal reflected inside the round bar (hereinafter, this signal is referred to as a flaw signal) is reduced. On the other hand, when a focused probe is used for the ultrasonic probe, the intensity of a flaw signal around the focal point is increased, but because the ultrasonic signal diffuses as the distance from the focal point increases, the intensity of the flaw signal is reduced. From such circumstances, Patent Literature 1 discloses a method for improving the detection capability and resolution capability of a flaw using a small diameter ultrasonic probe by receiving a flaw signal while scanning the ultrasonic probe and performing an aperture synthesis process on a plurality of the received flaw signals, while setting delay times according to the received positions of the flaw signals.

Citation List

Patent Literature

Patent Literature 1: Japanese Patent Application Laid-open No. 2005-233874

Summary

Technical Problem

However, in the method disclosed in Patent Literature 1, the combined width in the aperture synthesis process is fixed. Thus, the S/N ratio of a flaw signal at the position away from the focal position is reduced than that at the focal position. Moreover, conventionally, the combined width has been determined experimentally or empirically. However, the optimal combined width changes according to the shape and size of the ultrasonic probe, the flaw detection conditions such as a flaw detection pitch and a flaw detection depth, and the shape and size of an inspection material. Thus, determining the combined width experimentally or empirically one by one is a heavy load. Furthermore, as a result of further study by the inventors of the present invention, it has become clear that the problems described above also occur on a rectangular body such as a thick plate in addition to the round bar.

The present invention has been made in view of the above problems, and an object of the present invention is to provide an ultrasonic flaw detection method and an ultrasonic flaw detection device that can execute ultrasonic flaw detection with high detection capability and resolution capability at each depth of an inspection material, by performing an aperture synthesis process using the theoretically determined combined width without using an experimental or empirical determination method. Moreover, another object of the present invention is to provide a manufacturing equipment line for a steel material and a manufacturing method for a steel material that can manufacture a steel material with a good yield. Furthermore, another object of the present invention is to provide a quality assurance method for a steel material that can provide a high quality steel material.

Solution to Problem

An ultrasonic flaw detection method according to the present invention inspects an inside of an inspection material, includes: transmitting an ultrasonic signal from an ultrasonic probe to the inspection material; receiving the ultrasonic signal reflected inside the inspection material via the ultrasonic probe as a flaw signal; a receiving step of receiving a plurality of the flaw signals via the ultrasonic probe while changing a positional relation between the inspection material and the ultrasonic probe; a determining step of, in each positional relation between the inspection material and the ultrasonic probe: calculating a ratio of a received sound pressure of a flaw signal with respect to a received sound pressure of a flaw signal at a reference position as a received sound pressure ratio; and determining a combined width in an aperture synthesis process at each depth position of the inspection material based on the calculated received sound pressure ratio; and a step of inspecting the inside of the inspection material by executing the aperture synthesis process using the flaw signals according to the determined combined width.

In the above-described ultrasonic flaw detection method according to the present invention, the determining step includes: calculating a change rate of an S/N ratio of a flaw signal acquired through the aperture synthesis process from a change rate of the received sound pressure ratio; and determining a combined width that makes the change rate of the S/N ratio of the flaw signal to be a predetermined value or more, as the combined width in the aperture synthesis process.

In the above-described ultrasonic flaw detection method according to the present invention, the determining step includes: calculating a received sound pressure ratio R using a directional angle $\psi$ of an ultrasonic signal using following expression (1) and expression (2) when the ultrasonic probe is a round-shaped ultrasonic probe; and calculating a received sound pressure ratio R using a directional angle $\psi$ of an ultrasonic signal using following expression (1) and expression (3) when the ultrasonic probe is a rectangular-shaped ultrasonic probe:

$$R = Dc^2(\varphi) \tag{1}$$

$$Dc(\varphi) = \frac{2J_1(m)}{m} \tag{2}$$

$$Dc(\varphi) = \frac{\sin m}{m} \tag{3}$$

where a parameter m in the expression (2) and expression (3) is a coefficient determined by the directional angle $\psi$.

In the above-described ultrasonic flaw detection method according to the present invention, the inspecting step includes correcting intensity of a flaw signal A obtained through the aperture synthesis process using following expressions (4) and (5), by dividing the flaw signal A by a post-aperture synthesis received sound pressure ratio S obtained by adding and averaging received sound pressure ratios $R_n$ (n = 0 to N) for the number of N:

$$B = \frac{A}{S} \tag{4}$$

$$S = \sum_{n=0}^{N} \frac{R_n}{N+1} \tag{5}.$$

In the above-described ultrasonic flaw detection method according to the present invention, the determining step includes: setting an incident range of any ultrasonic signal in the inspection material from a positional relation between the ultrasonic probe and a depth position of an internal flaw; calculating a propagation path of the ultrasonic signal within the set incident range of the ultrasonic signal based on Snell's law; calculating a propagation path of the ultrasonic signal with respect to each depth position of the internal flaw by repeating a calculation of determining whether the propagation path of the ultrasonic signal passes through the internal flaw by a coordinate calculation; and calculating delay times of the flaw signals required for the aperture synthesis process based on the propagation path of the ultrasonic signal with respect to each calculated depth position.

In the above-described ultrasonic flaw detection method according to the present invention, the determining includes: setting an incident range of any ultrasonic signal in the inspection material from a positional relation between the ultrasonic probe and a depth position of an internal flaw; calculating a propagation path of the ultrasonic signal with respect to each depth position of the internal flaw by repeating a calculation of determining whether an angle between a normal line of the inspection material at an incident point of the ultrasonic signal within the set incident range of the ultrasonic signal and a line segment connecting the ultrasonic probe and the incident point of the ultrasonic signal, and an angle between the normal line and a line segment connecting an assumed flaw position and the incident point of the ultrasonic signal satisfy Snell's law; and calculating delay times of the flaw signals required for the aperture synthesis process based on the propagation path of the ultrasonic signal with respect to each calculated depth position.

An ultrasonic flaw detection device according to the present invention inspects an inside of an inspection material by transmitting an ultrasonic signal from an ultrasonic probe to the inspection material, and receiving the ultrasonic signal reflected inside the inspection material via the ultrasonic probe as a flaw signal, and includes: a reception unit configured to receive a plurality of the flaw signals via the ultrasonic probe while changing a positional relation between the inspection material and the ultrasonic probe; a determination unit configured to, in each positional relation between the inspection material and the ultrasonic probe: calculate a ratio of a received sound pressure of a flaw signal with respect to a received sound pressure of a flaw signal at a reference position as a received sound pressure ratio; and determine a combined width in an aperture synthesis process at each depth position of the inspection material based on the calculated received sound pressure ratio; and an inspection unit configured to inspect the inside of the inspection material by executing the aperture synthesis process using the flaw signals according to the determined combined width.

A manufacturing equipment line for a steel material according to the present invention includes: a manufacturing device configured to manufacture a steel material; and the ultrasonic flaw detection device according to the present invention configured to inspect an inside of the steel material manufactured by the manufacturing device.

A manufacturing method for a steel material according to the present invention includes: a manufacturing step of manufacturing a steel material; and a detecting step of detecting a flaw inside the steel material manufactured at the manufacturing step by using the ultrasonic flaw detection method according to the present invention.

A quality assurance method for a steel material according to the present invention includes: a detecting step of detecting a flaw inside a steel material by using the ultrasonic flaw detection method according to the present invention; and a quality assuring step of quality assuring the steel material from a flaw detection result obtained at the step of detecting a flaw.

Advantageous Effects of Invention

With the ultrasonic flaw detection method and the ultrasonic flaw detection device according to the present invention, it is possible to execute ultrasonic flaw detection with high detection capability and resolution capability at each depth of an inspection material, by performing an aperture synthesis process using the theoretically determined combined width without using an experimental or empirical determination method. Moreover, with the manufacturing equipment line for a steel material and the manufacturing method for a steel material according to the present invention, it is possible to manufacture a steel material with a good yield. Furthermore, with the quality assurance method for a steel material according to the present invention, it is possible to provide a high quality steel material.

Brief Description of Drawings

FIG. 1 is a schematic diagram illustrating a configuration of an ultrasonic flaw detection device, which is a first embodiment of the present invention.

FIG. 2 is a flowchart illustrating a flow of determining aperture synthesis process conditions, which is the first embodiment of the present invention.

FIG. 3 is a schematic diagram for explaining one aspect of a propagation path calculation process, which is the first embodiment of the present invention.

FIG. 4 is a schematic diagram for explaining another aspect of the propagation path calculation process, which is the first embodiment of the present invention.

FIG. 5 is a schematic diagram for explaining a delay time calculation process, which is the first embodiment of the present invention.

FIG. 6 is a diagram illustrating an example of a change in the relation between the flaw depth and the S/N ratio of a flaw signal according to a difference in combined width.

FIG. 7 is a schematic diagram for explaining an optimal combined width calculation process, which is the first embodiment of the present invention.

FIG. 8 is a flowchart illustrating a flow of the optimal combined width calculation process, which is the first embodiment of the present invention.

FIG. 9 is a diagram illustrating an example of a relation between a received sound pressure ratio and a rotation angle.

FIG. 10 is a diagram illustrating a relation between the combined width calculated based on the distribution of the received sound pressure ratio illustrated in FIG. 9, and an S/N ratio improvement coefficient E.

FIG. 11 is a diagram illustrating the results of performing ultrasonic flaw detection when the signal processing of the present invention is not performed.

FIG. 12 is a diagram illustrating the results of performing ultrasonic flaw detection when the signal processing of the present invention is performed.

FIG. 13 is a schematic diagram illustrating a configuration of an ultrasonic flaw detection device which is a second embodiment of the present invention.

FIG. 14 is a schematic diagram for explaining one aspect of a propagation path calculation process which is the second embodiment of the present invention.

FIG. 15 is a schematic diagram for explaining another aspect of the propagation path calculation process, which is the second embodiment of the present invention.

FIG. 16 is a schematic diagram for explaining a delay time calculation process, which is the second embodiment of the present invention.

FIG. 17 is a diagram illustrating the results of simulating a relation between the combined width and the S/N ratio improvement coefficient E.

FIG. 18 is a schematic diagram for explaining an optimal combined width calculation process, which is the second embodiment of the present invention.

Description of Embodiments

Hereinafter, a configuration and an operation of an ultrasonic flaw detection device, which is first and second embodiments of the present invention will be described in detail with reference to the accompanying drawings.

First Embodiment

Configuration

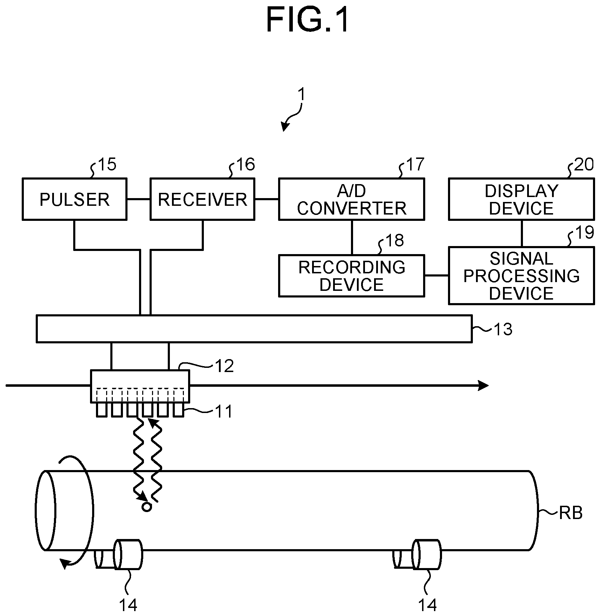

First, a configuration of the ultrasonic flaw detection device, which is the first embodiment of the present invention will be described with reference to FIG. 1.

FIG. 1 is a schematic diagram illustrating a configuration of the ultrasonic flaw detection device, which is the first embodiment of the present invention. As illustrated in FIG. 1, an ultrasonic flaw detection device 1, which is the first embodiment of the present invention, is a device that performs ultrasonic flaw detection on a round bar RB manufactured by rolling a cast steel billet, by an ultrasonic flaw detection method using a water immersion flaw detection method. The ultrasonic flaw detection device 1 includes a plurality of ultrasonic probes 11, a probe head 12, a mounting table 13, a rotation drive device 14, a pulser 15, a receiver 16, an A/D converter 17, a recording device 18, a signal processing device 19, and a display device 20 as the main components.

The ultrasonic flaw detection device according to the present invention includes a reception unit that receives a flaw signal via an ultrasonic probe, while changing a positional relation between an inspection material and the ultrasonic probe. In the ultrasonic flaw detection device 1 illustrated in FIG. 1 described above, the receiver 16, the A/D converter 17, and the recording device 18 correspond to the reception unit. Moreover, the ultrasonic flaw detection device according to the present invention includes a determination unit that determines the combined width in the aperture synthesis process at each depth position of an inspection material, by calculating a ratio of the received sound pressure of a flaw signal with respect to the received sound pressure of a flaw signal at the reference position as a received sound pressure ratio, in each positional relation between the inspection material and the ultrasonic probe, and on the basis of the calculated received sound pressure ratio. In addition, the ultrasonic flaw detection device according to the present invention includes an inspection unit that inspects inside of the inspection material, by executing the aperture synthesis process using a plurality of the flaw signals according to the determined combined width. In the ultrasonic flaw detection device 1 illustrated in FIG. 1 described above, the signal processing device 19 corresponds to the determination unit and the inspection unit.

Each of the ultrasonic probes 11 is disposed on a position separated from the round bar RB with a predetermined distance interposed therebetween, via water, which is the medium in the water immersion flaw detection method. During the ultrasonic flaw detection, an ultrasonic signal is transmitted to the round bar RB, when the ultrasonic probe 11 is excited by a pulse signal output from the pulser 15. The ultrasonic signal that propagates inside the round bar RB and that is reflected (hereinafter, referred to as a flaw signal) is received by the receiver 16 via the ultrasonic probe 11.

The probe head 12 includes the ultrasonic probes 11, and scans the round bar RB in the axis direction, by moving on the mounting table 13 disposed above the round bar RB. When the probe head 12 scans the round bar RB while the round bar RB is rotated in the circumferential direction, which is indicated by an arrow, by the rotation drive device 14, and when the receiver 16 receives a flaw signal, the ultrasonic flaw detection can be performed on the entire volume of the round bar RB. The rotation speed of the rotation drive device 14 and the scanning speed of the probe head 12 are set such that the ultrasonic flaw detection can be sufficiently performed on the entire volume of the round bar RB.

A flaw signal in an analog form received by the receiver 16 is converted to digital data by the A/D converter 17 in synchronization with the pulse signal output from the pulser 15, and is stored in the recording device 18. Consequently, the flaw signal in the entire volume of the round bar RB is stored in the recording device 18. The stored flaw signal is signal-processed by the signal processing device 19, and the results of the signal processing are displayed on the display device 20. The signal processing may be performed on the stored flaw signal anytime during the ultrasonic flaw detection, or may be performed after all the flaw signals are stored.

The signal processing device 19 determines the aperture synthesis process conditions as one signal processing. To determine the aperture synthesis process conditions, the signal processing device 19 calculates a received sound pressure ratio of a flaw signal from the directional angle of the ultrasonic probe 11, and determines the optimal combined width for each ultrasonic flaw detection area on the basis of the calculated received sound pressure ratio. The signal processing device 19 then executes the aperture synthesis process as one signal processing. By performing the aperture synthesis process using the flaw signals according to the determined combined width, the inside of the round bar RB is inspected, and by detecting an internal flaw of the round bar RB, the flaw inside the round bar RB is detected.

Next, an ultrasonic flaw detection method according to the present invention will be described. The ultrasonic flaw detection method according to the present invention includes three steps of (I) a step of receiving, (II) a step of determining, and (III) a step of inspecting. These steps are executed in the order of (I) the step of receiving, (II) the step of determining, and (III) the step of inspecting.

At the step of receiving, the flaw signals are received via the ultrasonic probe, while changing the positional relation between the inspection material and the ultrasonic probe. At the step of receiving, a known reception method of a flaw signal by the ultrasonic probe may be used. For example, the step of receiving may be implemented by operating the receiver 16, the A/D converter 17, and the recording device 18 described above.

At the step of determining, a combined width in the aperture synthesis process at each depth position of an inspection material is determined, by calculating a ratio of the received sound pressure of a flaw signal with respect to the received sound pressure of a flaw signal at the reference position as the received sound pressure ratio, in each positional relation between the inspection material and the ultrasonic probe, and on the basis of the calculated received sound pressure ratio. The calculation of the combined width at each depth position of the inspection material is the most important technique in the present invention. The calculation method of the combined width will be described in detail below.

In addition, at the step of determining, a delay time used in the aperture synthesis process will also be calculated. Moreover, in terms of improving the detection capability, it is preferable to calculate the combined width and the delay time for each flaw depth at the step of determining. A known method may be used as the aperture synthesis process for calculating the delay time. In the present specification, an example of calculating a propagation path of the transmitted ultrasonic signal in the inspection body, and determining a delay time on the basis of the calculated propagation path will be described below.

At the step of inspecting, the inside of the inspection material is inspected, by executing an aperture synthesis process on the flaw detection signal received at the step of receiving, according to the delay time and the combined width determined at the step of determining, and on the basis of the results of the aperture synthesis process. A known method may be used for the aperture synthesis process performed at the step of inspecting. In the present specification, an example of performing a process in which the delay time, which is determined at the step of determining, is multiplied by a plurality of waveforms, which are included in the combined width also determined at the step of determining, and is added, will be described below.

On the basis of the obtained results of the aperture synthesis process, it is possible to inspect the inside of the inspection material, and by understanding the state inside the inspection material, it is possible to perform flaw detection. For example, the state inside the inspection material to which a flaw detection can be performed, includes the intensity, the received time, and the like of a reflected signal from a flaw, the presence of a flaw, the position of the flaw, the size of the flaw, and the like. An output method of the obtained results of the aperture synthesis process may be appropriately determined according to the utilization purpose of the results and the like. However, it is preferable to output the obtained results in a waveform format or in an image format relative to the position (width direction, rolling direction, depth, thickness, and the like) because of high visibility.

With the ultrasonic flaw detection method according to the present invention, the detection capability can be improved, because the ratio (S/N ratio) of noise with respect to a flaw signal will be improved.

Determination of Aperture Synthesis Process Conditions

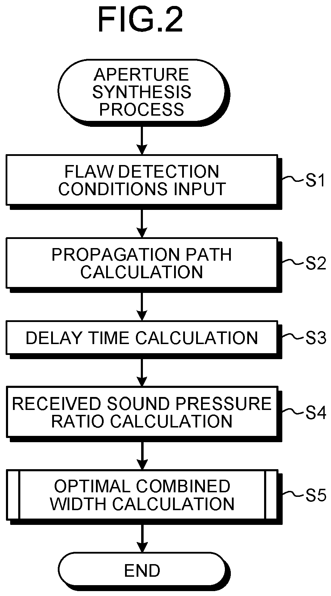

With reference to FIG. 2, an operation of the signal processing device 19 when an aperture synthesis process conditions, that is, the combined width and the delay time are to be determined at the step of determining, will be described. In addition, at the step of determining, an example of a method of calculating the propagation path of an ultrasonic signal used for determining the delay time will be described. In this example, the propagation path is a propagation path of an ultrasonic signal in the inspection body. According to the needs, the propagation path may also be a propagation path of an ultrasonic signal in the inspection body and the medium. Moreover, hereinafter, an example of a method of calculating a received sound pressure ratio that is a ratio of the received sound pressure of a flaw signal with respect to the received sound pressure of a flaw signal at the reference position, used for determining the combined width will also be described.

FIG. 2 is a flowchart illustrating a flow of determining the aperture synthesis process conditions, which is the first embodiment of the present invention. The aperture synthesis process conditions are not only determined before the ultrasonic flaw detection is performed, but may also be determined after the ultrasonic flaw detection is started on the basis of a value obtained during the ultrasonic flaw detection such as when the thickness of the round bar RB is measured using an ultrasonic signal.

The aperture synthesis process conditions are determined in the order of a flaw detection conditions input step (S1), a propagation path calculation step (S2), a delay time calculation step (S3), a received sound pressure ratio calculation step (S4), and an optimal combined width calculation step (S5). By using the round bar RB as the inspection body, each step will be described in detail.

In the process at step S1, the signal processing device 19 acquires the ultrasonic flaw detection conditions such as the size of the round bar RB, the size and shape of the ultrasonic probe 11, the measuring pitch, the positional relation with the round bar RB, and an ultrasonic flaw detection area. The ultrasonic flaw detection conditions are not only acquired before the ultrasonic flaw detection is performed, but may also be acquired during the ultrasonic flaw detection or after the ultrasonic flaw detection. This completes the process at step S1, and the determination of the aperture synthesis process conditions proceeds to the process at step S2.

In the process at step S2, by using the ultrasonic flaw detection conditions acquired in the process at step S1, the signal processing device 19 calculates a propagation path of an ultrasonic signal that is made incident on the round bar RB from the ultrasonic probe 11 and that passes through the assumed flaw position according to Snell's law (propagation path calculation process). The details of the propagation path calculation process will be described below. This completes the process at step S2, and the determination of the aperture synthesis process conditions proceeds to the process at step S3.

In the process at step S3, the signal processing device 19 calculates the delay times of other flaw signals with respect to the reference flaw signal at each received position (delay time calculation process). The details of the delay time calculation process will be described below. This completes the process at step S3, and the determination of the aperture synthesis process conditions proceeds to the process at step S4.

In the process at step S4, the signal processing device 19 calculates the received sound pressure ratio of a flaw signal at each positional relation between the round bar RB and the ultrasonic probe 11 (received sound pressure ratio calculation process). The details of the received sound pressure ratio calculation process will be described below. This completes the process at step S4, and the determination of the aperture synthesis process conditions proceeds to the process at step S5.

In the process at step S5, the signal processing device 19 determines the optimal combined width in the aperture synthesis process at each depth position of the round bar RB, on the basis of the received sound pressure ratio calculated in the process at step S4. This completes the process at step S5, and a series of determinations of the aperture synthesis process conditions is finished.

Propagation Path Calculation Process

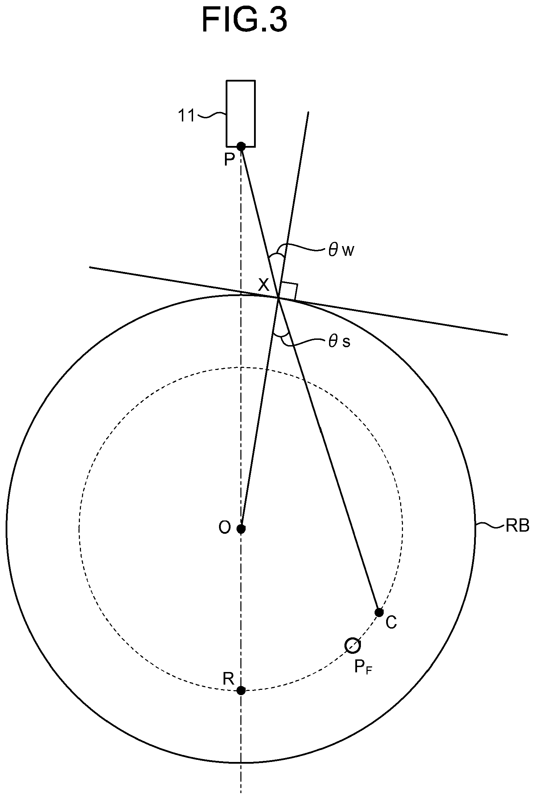

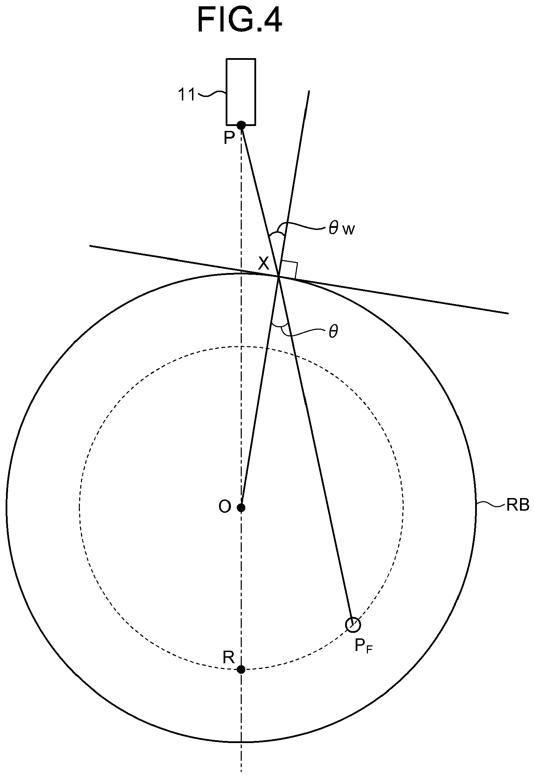

Next, with reference to FIG. 3 and FIG. 4, the propagation path calculation process at step S2 will be described in detail.

To acquire a flaw signal with a high S/N ratio by the aperture synthesis process, it is preferable to calculate the delay times of the flaw signals to be combined in an accurate manner. In particular, to perform ultrasonic flaw detection on a steel material having a curved surface shape such as the round bar RB, the propagation path of an ultrasonic signal changes significantly by the refraction of the curved surface. Thus, it is preferable to calculate the delay times of the flaw signals to be combined in an accurate manner. Hence, in the present embodiment, on the basis of the coordinates of the ultrasonic probe 11 and the assumed flaw position, the propagation path of an ultrasonic signal that is made incident on the round bar RB from the ultrasonic probe 11 and that passes through the assumed flaw position is calculated while satisfying Snell's law.

Hereinafter, with reference to FIG. 3 and FIG. 4, one aspect and another aspect of the propagation path calculation process, which is the first embodiment of the present invention, will be described.

FIG. 3 is a schematic diagram for explaining one aspect of the propagation path calculation process, which is the first embodiment of the present invention. Hereinafter, P indicates the position of the ultrasonic probe 11, $P_F$ indicates the assumed flaw position, O indicates the center of the round bar RB, Vw indicates the sound speed in the water, which is the medium in the water immersion flaw detection method, and Vs indicates the sound speed in the round bar RB. Moreover, as illustrated in FIG. 3, it is assumed that the assumed flaw position $P_F$ is on the circumference of a circle the radius of which is the line segment OR.

First, in the present aspect, an incident point X of an ultrasonic signal is set, and an incident angle $\theta$w of the ultrasonic signal is obtained from an angle between the line segment PX and the line segment OX. Next, according to Snell's law, the refraction angle $\theta$s of an ultrasonic signal satisfies the following expression (6). Thus, by substituting the incident angle $\theta$w of the ultrasonic signal into the expression (6), it is possible to obtain the refraction angle $\theta$s of the ultrasonic signal. Moreover, it is also possible to obtain the intersection C of a straight line that passes through the incident point X of the ultrasonic signal and that is refracted at the refraction angle $\theta$s, and a circle the radius of which is the line segment OR. Thus, by finding the incident point X of the ultrasonic wave at which the intersection C coincides with the assumed flaw position $P_F$, while changing the incident point X of the ultrasonic signal, it is possible to calculate the propagation path of the ultrasonic signal that is made incident on the incident point X and that passes through the assumed flaw position $P_F$.

$$\frac{\sin \theta w}{Vw} = \frac{\sin \theta s}{Vs} \tag{6}$$

FIG. 4 is a schematic diagram for explaining another aspect of the propagation path calculation process which is the first embodiment of the present invention. In the present aspect, the incident point X of an ultrasonic signal is first set, and the incident angle $\theta$w of the ultrasonic signal is obtained from an angle between the line segment PX and the line segment OX. Then, by finding an angle $\theta$ between the line segment OX and the line segment $P_F$X that satisfies Snell's law indicated in the following expression (7), while changing the incident point X of the ultrasonic signal, it is possible to calculate the propagation path of the ultrasonic signal that is made incident on the incident point X and that passes through the assumed flaw position $P_F$.

$$\frac{\sin \theta w}{Vw} = \frac{\sin \theta}{Vs} \tag{7}$$

In the propagation path calculation process described above, only the movement of the assumed flaw position $P_F$ according to the rotation of the round bar RB is taken into account. However, when the ultrasonic probe 11 is scanned in the axis direction, it is preferable to calculate the propagation path of the ultrasonic signal by taking into account the moving amount of the ultrasonic probe 11 in the axis direction. Moreover, the propagation path calculation process described above is basically performed before the ultrasonic flaw detection is started on the basis of the size of the round bar RB and the flaw detection conditions. However, if there is a possibility that the propagation path of the ultrasonic signal differs significantly from the pre-calculated results, due to the uneven surface shape and peripheral speed of the round bar RB, it is preferable to calculate the propagation path of the ultrasonic signal in real time on the basis of the information obtained during the ultrasonic flaw detection.

Delay Time Calculation Process

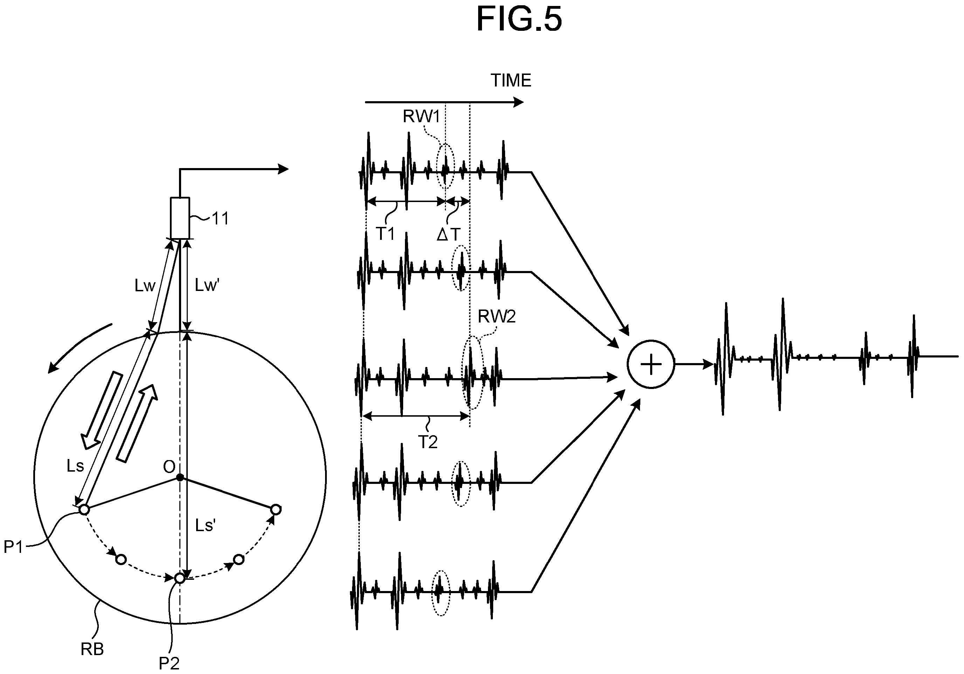

Next, with reference to FIG. 5, the delay time calculation process at step S3 will be described in detail.

FIG. 5 is a schematic diagram for explaining the delay time calculation process, which is the first embodiment of the present invention. As illustrated in FIG. 5, the position of an internal flaw, which is indicated by a white circle mark, moves according to the rotation of the round bar RB. Hence, the intensity and the reception time of the flaw signal received by the ultrasonic probe 11 change. More specifically, a first flaw signal RW1 and a second flaw signal RW2 illustrated in FIG. 5 are reflected signals of the ultrasonic signal from the flaws at a first flaw position P1 and a second flaw position P2 received by the ultrasonic probe 11. In this example, if the sound speed in the water, which is the medium in the water immersion flaw detection method, is referred to as Vw, and the sound speed in the round bar RB is referred to as Vs, a propagation time T1 of the first flaw signal RW1 is represented by the following expression (8), a propagation time T2 of the second flaw signal RW2 is represented by the following expression (9), and a delay time $\Delta$T that is a difference between the propagation time T1 and the propagation time T2, is represented by the following expression (10).

$$T1 = 2\left(\frac{Lw}{Vw} + \frac{Ls}{Vs}\right) \tag{8}$$

$$T2 = 2\left(\frac{Lw'}{Vw} + \frac{Ls'}{Vs}\right) \qquad (9)$$

$$\Delta T = T1 - T2 \qquad (10)$$

In this example, the flaw signals are combined by calculating the delay times of the other flaw signals with respect to the reference flaw signal at each received position. Thus, random noise cancels each other out, and the S/N ratio of the flaw signal will be improved. If the second flaw signal RW2 is used as the reference, the first flaw signal RW1 is delayed by the delay time $\Delta T$ indicated in the expression (10), and is added. Consequently, random noise cancels each other out, and the flaw signals, the phases of which are aligned, intensify each other. Thus, the S/N ratio of the flaw signal becomes higher than before the aperture synthesis process is performed. Moreover, by performing the aperture synthesis process by calculating the delay time at the position of the ultrasonic probe 11 and at each depth position of the round bar RB, it is possible to detect a flaw signal at a high S/N ratio, regardless of the depth of a flaw in the round bar RB.

Received Sound Pressure Ratio Calculation Process and Optimal Combined Width Calculation Process

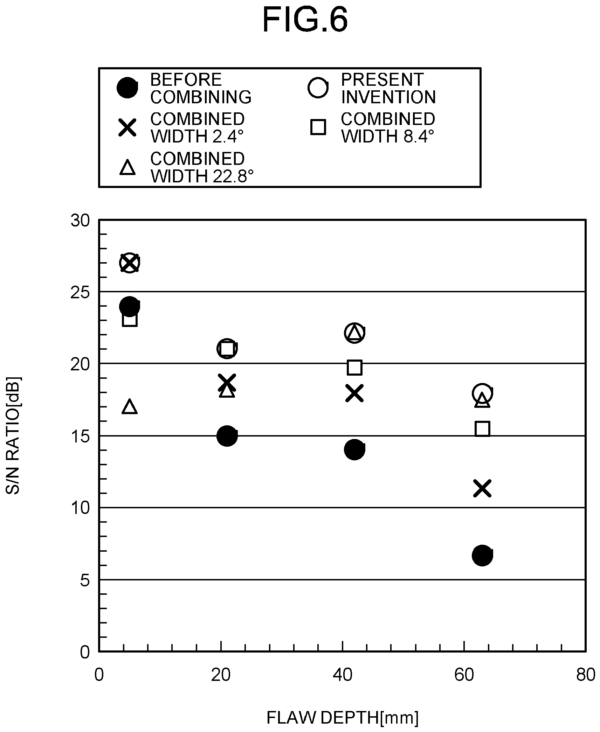

Next, with reference to FIG. 6 to FIG. 9, the received sound pressure ratio calculation process at step S4 and the optimal combined width calculation process at step S5 illustrated in FIG. 2 will be described in detail.

The intensity of a flaw signal changes according to the positional relation between the ultrasonic probe 11 and the internal flaw. More specifically, in the far sound field, the intensity of the flaw signal is maximized, when there is a flaw on the center axis of the ultrasonic probe 11, and the intensity of the flaw signal is reduced as an angle between the center axis of the ultrasonic probe 11 and the propagation path of the ultrasonic wave that passes through the internal flaw is increased. To obtain a flaw signal with a high S/N ratio by the aperture synthesis process, the flaw signals must be added together within a range the flaw signals have sufficient intensity. If the flaw signals with low intensity are added together, the effect of improving the S/N ratio is reduced. Moreover, because the ultrasonic signal output from the ultrasonic probe 11 diffuses and propagates, the sound pressure distribution is increased with an increase in the distance. In this process, if there is a flaw in the sound pressure distribution, a flaw signal with sufficient intensity can be obtained. That is, the combined width (the number of flaw signals to be added) with sufficient intensity is changed by the sound pressure distribution of the ultrasonic signal and the position of the flaw that moves in the sound pressure distribution. Thus, to obtain a flaw signal with a high S/N ratio by the aperture synthesis process, the combined width must be set suitably based on the position of the internal flaw and the flaw detection conditions. Thus, in the present embodiment, a suitable combined width is calculated for each depth position of an internal flaw, on the basis of the received sound pressure ratio of the flaw signal.

FIG. 6 is a diagram illustrating an example of a change in the relation between the flaw depth and the S/N ratio of a flaw signal according to a difference in the combined width. More specifically, FIG. 6 illustrates the experimental results obtained by detecting four artificial flaws with a diameter of φ0.2 mm created at the internal depths of 5 mm, 21 mm, 42 mm, and 63 mm in a round bar steel with a diameter of φ169 mm, and by performing an aperture synthesis process with the combined width 2.4°, the combined width 8.4°, the combined width 22.8°, and the present invention. In the present experiment, a round ultrasonic probe with a diameter of 6.4 mm and a frequency of 5 MHz is used as the ultrasonic probe 11. The plots of the combined width 2.4°, the combined width 8.4°, and the combined width 22.8° indicate the results of performing an aperture synthesis process on the four artificial flaw signals at different internal depths with fixed combined widths (2.4°, 8.4°, and 22.8°) . Note that the combined widths of 2.4°, 8.4°, and 22.8° are each an optimal combined width at the internal depth of 5 mm, 21 mm, or 42 mm determined by the present invention.

As illustrated in FIG. 6, the S/N ratio of the flaw signal at a depth of 5 mm is maximized when the combined width is 2.4°, the S/N ratio of the flaw signal at a depth of 21 mm is maximized when the combined width is 8.4°, and the S/N ratio of the flaw signal at a depth of 42 mm is maximized when the combined width is 22.8°. Thus, the combined width that maximizes the S/N ratio differs at each flaw depth, and it demonstrates that the maximum S/N ratio can be obtained at every flaw depth, by setting a suitable combined width at every flaw depth. In fact, in the present invention, compared to when the combined width is fixed at every flaw depth, depending on the depth position, the S/N ratio is improved by 10 dB or more, and it has been confirmed that the present invention is effective.

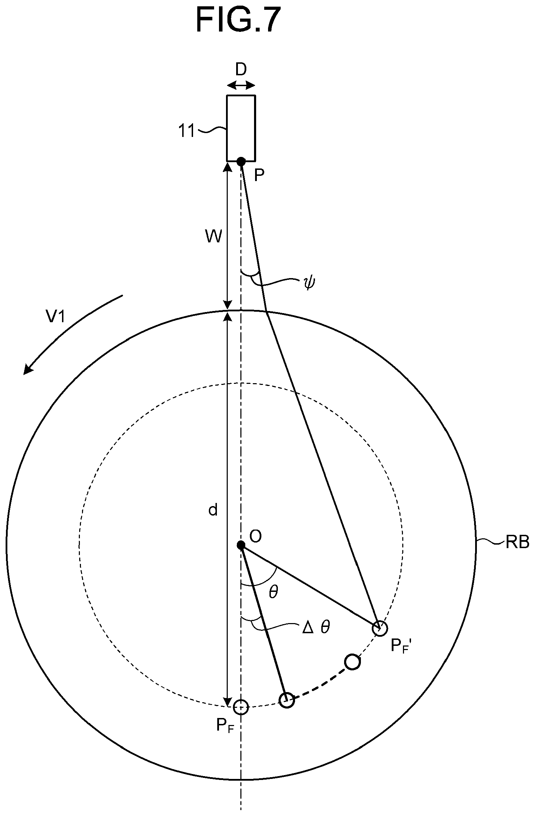

FIG. 7 is a schematic diagram for explaining an optimal combined width calculation process, which is the first embodiment of the present invention. As illustrated in FIG. 7, in the present embodiment, a directional angle $\psi$ of an ultrasonic signal is calculated from the propagation path of the ultrasonic signal, which is calculated in the propagation path calculation process, a change in the received sound pressure ratio of the flaw signal when the assumed flaw position is rotated is calculated, and the combined width is calculated from the distribution of the received sound pressure ratio of the flaw signal. In this example, R indicates the diameter of the round bar RB, V1 indicates the rotation speed of the round bar RB, Vs indicates the propagation speed of the ultrasonic wave in the round bar RB, f indicates a pulse repetition frequency (PRF) of the ultrasonic probe 11, F indicates the frequency of the ultrasonic probe 11, D indicates the length of the ultrasonic probe 11 (radius when the ultrasonic probe 11 is formed in a round shape, and the side length when the ultrasonic probe 11 is formed in a rectangular shape), W indicates the distance between the ultrasonic probe 11 and the surface of the round bar RB, Vw indicates the sound speed in the water, which is the medium in the water immersion flaw detection method, $P_F$ indicates the assumed flaw position on the center axis of the ultrasonic probe 11, d indicates the depth of the assumed flaw position $P_F$ from the surface of the round bar RB, $P_F'$ indicates the post-rotation assumed flaw position when the assumed flaw has rotated and moved from the assumed flaw position $P_F$ by the angle θ, and ψ indicates an angle (directional angle) between the propagation path of the ultrasonic signal and the center axis of the ultrasonic probe 11 when the propagation path calculation process is performed on the position P of the ultrasonic probe 11 and the assumed flaw position $P_F'$.

Basically, the received sound pressure is calculated by assuming a far sound field, and the assumed flaw position $P_F$ needs to satisfy the following expression (11). In this example, a near sound field limit distance x0 is represented by the following expression (12). However, if the assumed flaw position PF does not satisfy the expression (11), the combined width may also be calculated by obtaining the sound pressure in a near sound field.

Expression 11

$$W + d\frac{Vs}{Vw} = x0 \qquad\qquad \ldots (11)$$

Expression 12

$$x0 = D^2 \times \frac{F}{4Vw} \qquad\qquad \ldots (12)$$

If the ultrasonic probe 11 is formed in a round shape, the ratio (received sound pressure ratio) R of the received sound pressure of the flaw signal from the post-rotation assumed flaw position $P_F'$ with respect to the received sound pressure of the flaw signal from the assumed flaw position $P_F$ can be represented by the following expressions (13) to (15), using the directional angle ψ. Note that J1 in the expression (14) indicates the Bessel function, and m in the expressions (14) and (15) is a coefficient determined by the directional angle ψ.

$$R = Dc^2(\varphi) \qquad\qquad (13)$$

$$Dc(\varphi) = \frac{2J_1(m)}{m} \qquad\qquad (14)$$

$$m = \frac{VwD}{F}\pi \times \sin\varphi \qquad\qquad (15)$$

On the other hand, when the ultrasonic probe 11 is formed in a rectangular shape, the received sound pressure ratio R can be represented by the expressions (13) and (15), and the following expression (16), using the directional angle ψ. When the ultrasonic probe 11 is not formed in a round shape or a rectangular shape, and is formed in a complicated shape, the received sound pressure ratio R may be determined using the results of experiments and physical analysis through a finite element method or the like. If the flaw to be detected has a strong directivity, the received sound pressure ratio R is sometimes obtained by multiplying a reflection directivity function of the flaw by the expression (13). In the present embodiment, the combined width is calculated using the received sound pressure ratio R calculated by the procedure described above.

$$Dc(\varphi) = \frac{\sin m}{m} \qquad (16)$$

More specifically, the ultrasonic probe 11 receives a flaw signal every time the assumed flaw position $P_F$ is rotated by an angle pitch $\Delta\theta$. The angle pitch $\Delta\theta$ is represented by the following expression (17).

$$\Delta\theta = \frac{Vl}{Rf} \qquad (17)$$

A post-aperture synthesis received sound pressure ratio S is obtained by performing an aperture synthesis process in which the delay time is multiplied by the flaw signal acquired within a range where the assumed flaw position $P_F$ has moved from $-n_1\Delta\theta$ to $n_2\Delta\theta$, and is added and averaged. The post-aperture synthesis received sound pressure ratio S is represented by the following expression (18). In the expression (18), $R(n\Delta\theta)$ indicates the received sound pressure ratio at the position where the assumed flaw is rotated from the assumed flaw position $P_F$ by $n\Delta\theta$. The assumed flaw position $P_F$ is not only set on the center axis of the ultrasonic probe 11, and may be set according to the flaw detection conditions.

$$S = \sum_{n=-n1}^{n2} \frac{R(n\Delta\theta)}{n1 + n2 + 1} \qquad (18)$$

If it is assumed that the noise becomes $1/N^{1/2}$ by adding and averaging the number of times of addition N (= $n_1 + n_2 + 1$), the S/N ratio improvement coefficient E after the aperture synthesis process is performed with respect to the S/N ratio at the assumed flaw position $P_F$ is represented by the following expression (19).

$$E = 20\log_{10}\left(S\sqrt{n1 + n2 + 1}\right) \qquad (19)$$

Thus, by setting a combined width N that maximizes the S/N ratio improvement coefficient E by the expression (19), and performing the aperture synthesis process, it is possible to maximize the S/N ratio of the flaw signal. Moreover, by determining the number of times of addition N that satisfies the following expression (20), and performing the aperture synthesis process, it is possible to sufficiently improve the S/N ratio of the flaw signal.

$$E \geq E_{max} \times 0.7 \qquad (20)$$

To evaluate a flaw signal in the ultrasonic flaw detection, the intensity of the flaw signal is also important in addition to the S/N ratio. If the intensity of a flaw signal varies significantly before and after the aperture synthesis process, the internal flaw cannot be evaluated accurately. Thus, it is preferable to restore the intensity, which is reduced by the aperture synthesis process, to the intensity before the process is performed. More specifically, by outputting a correction output value B, which is corrected by the following expression (21) using the post-aperture synthesis received sound pressure ratio S represented by the expression (18), to an output value A after the aperture synthesis process is performed, the intensity of the flaw signal before the aperture synthesis process can be coincide with that after the aperture synthesis process. By making the intensity of the flaw signal before the aperture synthesis process coincides with that after the aperture synthesis process, quantitative evaluation can be performed on the flaw diameter and the flaw length.

$$B = \frac{A}{S} \qquad (21)$$

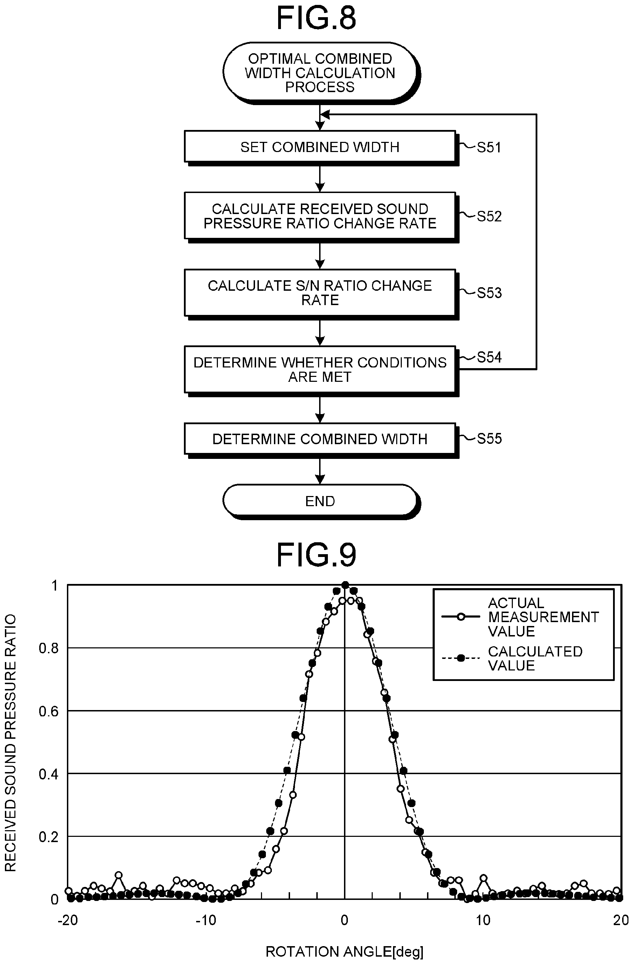

Summarizing the processes described above, the optimal combined width calculation process will be as illustrated in the flowchart indicated in FIG. 8. FIG. 8 is a flowchart illustrating a flow of the optimal combined width calculation process, which is the first embodiment of the present invention. As illustrated in FIG. 8, in the optimal combined width calculation process in the present embodiment, the signal processing device 19 first temporarily sets the combined width in the aperture synthesis process (step S51). Next, the signal processing device 19 calculates the post-aperture synthesis received sound pressure ratio (received sound pressure ratio change rate) S by adding and averaging the received sound pressure ratio of the flaw signal, using the temporarily set combined width and the expression (18) (step S52). Next, the signal processing device 19 calculates the S/N ratio improvement coefficient E (S/N ratio change rate) acquired through the aperture synthesis process, by obtaining a ratio between the post-aperture synthesis received sound pressure ratio S and the change rate of noise using the expression (19) (step S53). The signal processing device 19 then determines whether the S/N ratio improvement coefficient E satisfies predetermined conditions such as the conditions indicated in the expression (20) (step S54). If the S/N ratio improvement coefficient E satisfies the predetermined conditions, the signal processing device 19 determines the combined width temporarily set in the process at step S51 as the optimal combined width (step S55). On the other hand, if the S/N ratio improvement coefficient E does not satisfy the predetermined conditions, the signal processing device 19 returns the optimal combined width calculation process to the process at step S51.

Examples

Superior results of the ultrasonic flaw detection method according to the present invention will be described with reference to examples. In the present examples, an ultrasonic flaw detection is performed on a round bar sample provided with an artificial flaw, and the aperture synthesis process is performed using the ultrasonic flaw detection method according to the present invention. As the ultrasonic probe, a round ultrasonic probe with a diameter of 6.4 mm and a frequency of 5 MHz is used, and as the round bar sample, a round bar with a diameter of $\varphi$169 mm in which an artificial flaw of $\varphi$0.2 mm is created is used. The ultrasonic probe and the round bar sample are acoustically coupled by a local water immersion flaw detection method, and the water distance is set to 50 mm, and the measurement angle pitch is set to 0.6°. Moreover, the near sound field limit distance of the ultrasonic probe is 34.5 mm, which is shorter than the water distance of 50 mm, and satisfies the applicable conditions of the present technique.

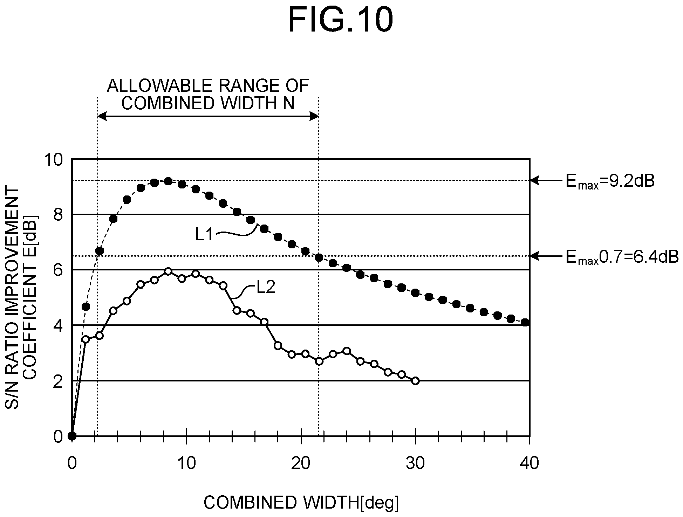

FIG. 9 is a diagram illustrating a relation between the received sound pressure ratio of a flaw signal and the rotation angle from the artificial flaw of $\varphi$0.2 mm at the surface depth 21 mm. The actual measurement values of the received sound pressure ratios generally coincide with the calculated values, and it has been confirmed that the calculation of the received sound pressure ratio in the technique of the present invention is effective. FIG. 10 is a diagram illustrating a relation between the combined width calculated based on the distribution of the received sound pressure ratio illustrated in FIG. 9, and the S/N ratio improvement coefficient E. However, the calculated values (curved line L1) in FIG. 10 are values obtained as a result of performing the aperture synthesis process with the positive-negative symmetric combined width around the rotation angle 0° using the calculated values of the received sound pressure ratios illustrated in FIG. 9.

In the curved line L1 of the calculated values illustrated in FIG. 10, the S/N ratio improvement coefficient E takes the maximum value 9.2 dB at the combined width 8.4°. Thus, the combined width N satisfies 2.4° ≤ N ≤ 21.6° that satisfies the expression of S/N ratio improvement coefficient E ≥ 6.4 dB. Moreover, the curved line L2 of the actual measurement values substantially coincides with the trend of the curved line L1 of the calculated values, and the S/N ratio improvement coefficient E is maximized at the combined width 8.4°. Consequently, it has been confirmed that the determination method of the combined width by the present invention is effective.

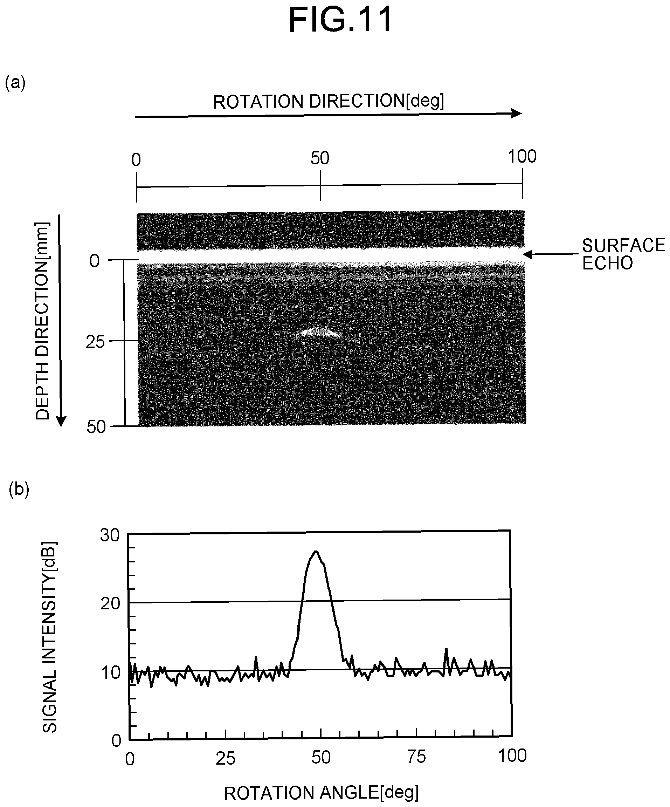

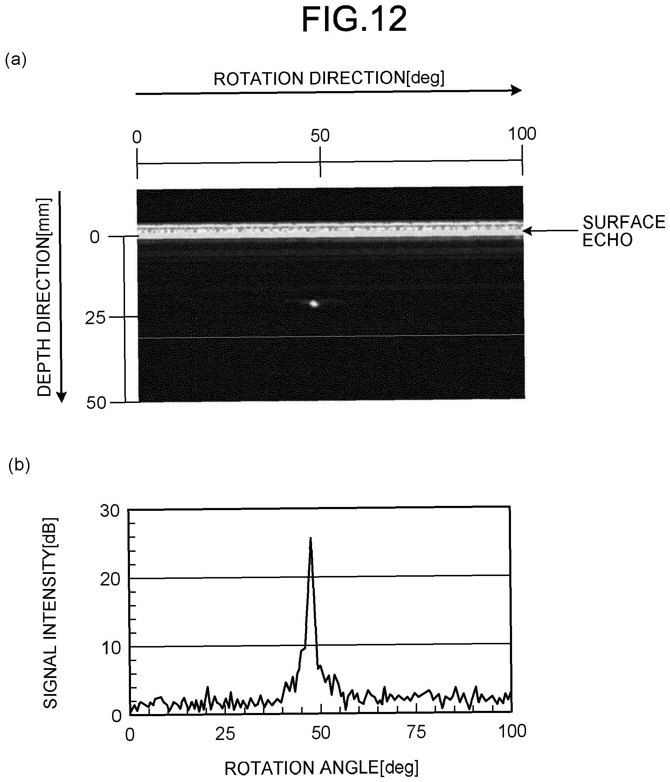

FIGS. 11(a) and (b) are each a diagram illustrating the results of performing the ultrasonic flaw detection on an artificial flaw of $\varphi$0.2 mm at the surface depth 21 mm, when the signal processing of the present invention is not performed. FIGS. 12 (a) and (b) are each a diagram illustrating the results of performing the ultrasonic flaw detection on an artificial flaw of $\varphi$0.2 mm at the surface depth 21 mm, when the signal processing of the present invention is performed. In the present experiment, the combined width that maximizes the S/N ratio is calculated, and the combined width is set to 8.4°. As illustrated in FIGS. 12(a) and (b), when the signal processing of the present invention is performed, the S/N ratio is improved by 6 dB, and the flaw of $\varphi$0.2 mm is detected when the S/N ratio is 21 dB.

Second Embodiment

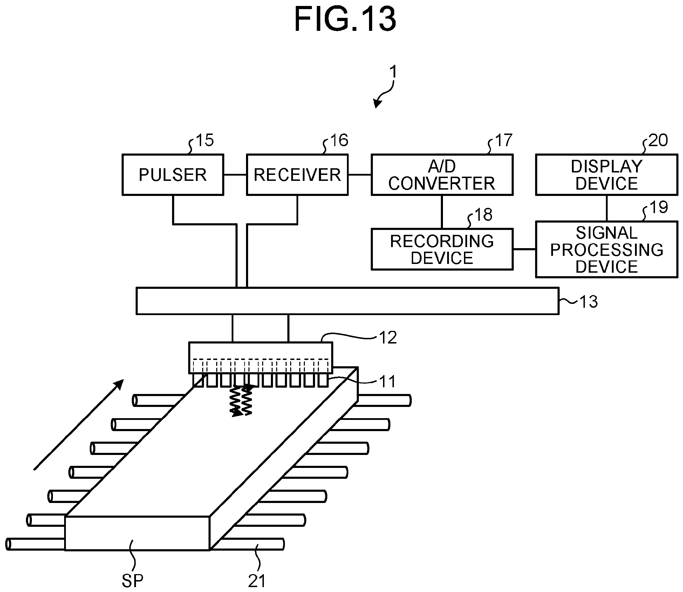

Next, with reference to FIG. 13 to FIG. 18, the configuration and the operation of the ultrasonic flaw detection device, which is a second embodiment of the present invention, will be described.

Configuration

First, with reference to FIG. 13, the configuration of the ultrasonic flaw detection device, which is the second embodiment of the present invention, will be described.

FIG. 13 is a schematic diagram illustrating the configuration of the ultrasonic flaw detection device, which is the second embodiment of the present invention. As illustrated in FIG. 13, the configuration of the ultrasonic flaw detection device 1, which is the second embodiment of the present invention, is different from that of the ultrasonic flaw detection device 1, which is the first embodiment of the present invention illustrated in FIG. 1, in that (1) a steel plate SP manufactured by rolling a cast steel piece is the inspection material, and that (2) the steel plate SP is transferred by a conveyance line 21 so as to pass below the ultrasonic probe 11 along the longitudinal direction of the steel plate SP. Because the other points are the same as the configuration of the ultrasonic flaw detection device 1, which is the first embodiment of the present invention illustrated in FIG. 1, the description thereof will be omitted below.

Determination of Aperture Synthesis Process Conditions

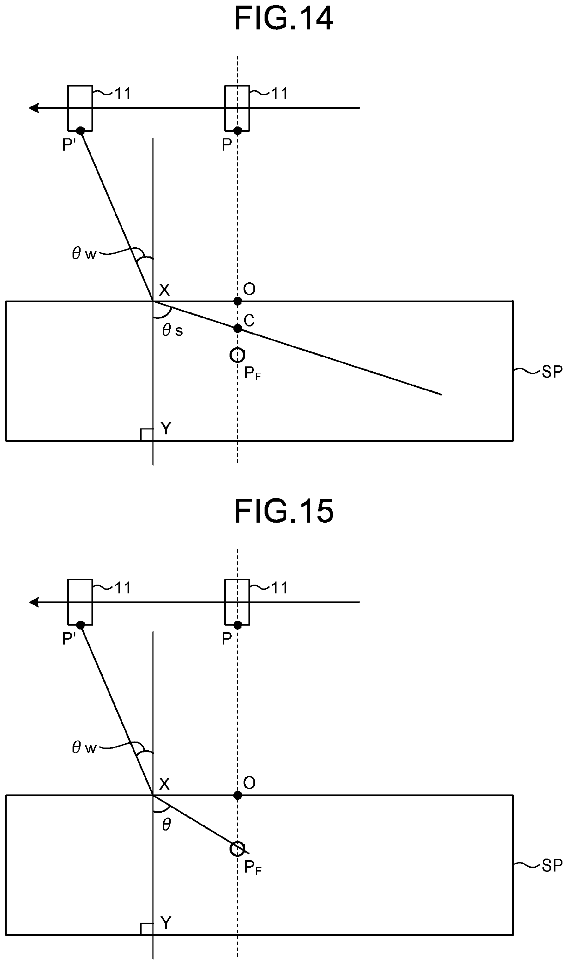

Next, with reference to FIG. 14 to FIG. 18, an operation of the signal processing device 19 when the aperture synthesis process conditions are to be determined will be described. The entire flow of determining the aperture synthesis process conditions is the same as the flow of determining the aperture synthesis process conditions which is the first embodiment of the present invention illustrated in FIG. 2. However, because the inspection material is changed from the round bar RB to the steel plate SP, a part of the contents of the propagation path calculation process, the delay time calculation process, the received sound pressure ratio calculation process, and the optimal combined width calculation process is different from the contents in the first embodiment. Thus, in the following, only the differences between the processes will be described.

Propagation Path Calculation Process

FIG. 14 is a schematic diagram for explaining one aspect of a propagation path calculation process which is the second embodiment of the present invention. Hereinafter, P and P' indicate the positions of the ultrasonic probe 11 that moves in the longitudinal direction of the steel plate SP, $P_F$ indicates the assumed flaw position, O indicates the intersection between the line segment, which connects the position P of the ultrasonic probe 11 and the assumed flaw position $P_F$, and the surface of the steel plate SP, Vw indicates the sound speed in the water, which is the medium in the water immersion flaw detection method, and Vs indicates the sound speed in the steel plate SP.

First, in the present embodiment, the incident angle $\theta w$ of the ultrasonic signal is obtained, by setting the incident point X of an ultrasonic signal, and from an angle between the line segment P'X and the line segment XY. The line segment XY is the normal line of the steel plate SP that passes through the incident point X. Next, according to Snell's law, the refraction angle $\theta s$ of the ultrasonic signal satisfies the expression (6) described above. Thus, the refraction angle $\theta s$ of the ultrasonic signal can be obtained by substituting the incident angle $\theta w$ of the ultrasonic signal into the expression (6). Moreover, the intersection C between the straight line that passes through the incident point X of the ultrasonic signal and that is refracted at the refraction angle $\theta s$, and the line segment OP can be obtained. Thus, by finding the incident point X of the ultrasonic signal at which the intersection C coincides with the assumed flaw position $P_F$, while changing the incident point X of the ultrasonic wave, it is possible to calculate the propagation path of the ultrasonic signal that is made incident on the incident point X and that passes through the assumed flaw position $P_F$.

FIG. 15 is a schematic diagram for explaining another aspect of the propagation path calculation process which is the second embodiment of the present invention. First, in the present embodiment, the incident angle $\theta w$ of an ultrasonic signal is obtained, by setting the incident point X of the ultrasonic signal, and from an angle between the line segment P'X and the line segment XY. Then, by finding the angle $\theta$ between the line segment XY and the line segment $P_F$X that satisfies Snell's law indicated in the expression (7) described above, while changing the incident point X of the ultrasonic signal, it is possible to calculate the propagation path of the ultrasonic signal that is made incident on the incident point X and that passes through the assumed flaw position $P_F$.

Delay Time Calculation Process

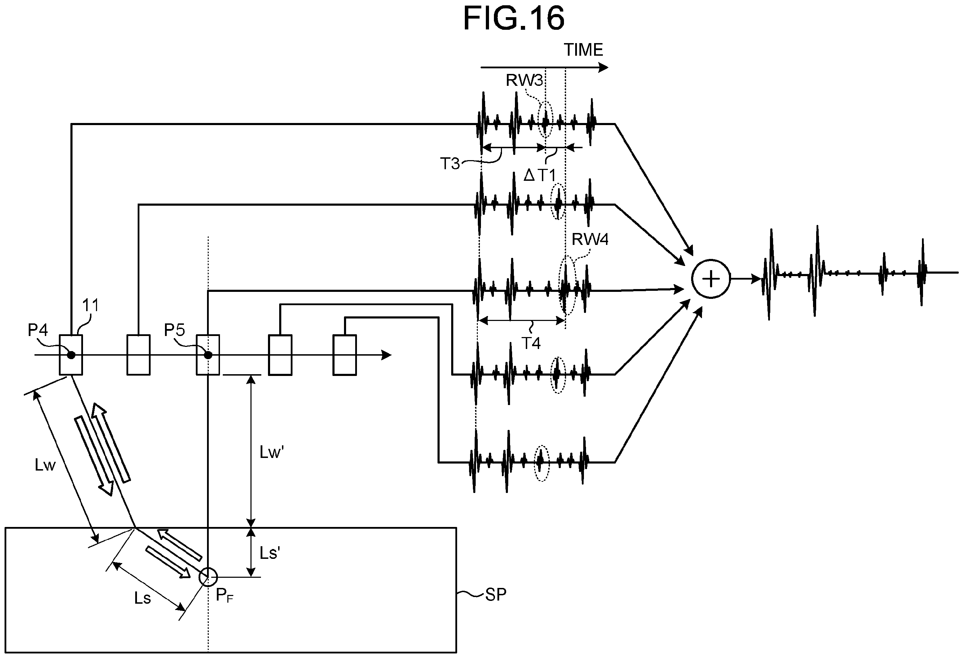

FIG. 16 is a schematic diagram for explaining a delay time calculation process which is the second embodiment of the present invention. As illustrated in FIG. 16, when the positional relation between the ultrasonic probe 11 and the internal flaw located at the assumed flaw position $P_F$ changes, the intensity and the received time of the flaw signal received by the ultrasonic probe 11 change. More specifically, a third flaw signal RW3 and a fourth flaw signal RW4 are reflected signals of ultrasonic waves from the flaws that are received when the ultrasonic probe 11 is at a position P4 and a position P5. In this example, when the sound speed in the water, which is the medium in the water immersion flaw detection method, is referred to as Vw, and when the sound speed in the round bar RB is referred to as Vs, a propagation time T3 of the third flaw signal RW3 can be calculated using the expression (8) described above (replace T1 with T3), a propagation time T4 of the fourth flaw signal RW4 can be calculated using the expression (9) described above (replace T2 with T4), and a delay time $\Delta T1$, which is a difference between the propagation time T3 and the propagation time T4, can be calculated using the expression (10) described above (replace $\Delta T$ with $\Delta T1$).

In this example, the flaw signals are combined by calculating the delay times of the flaw signals with respect to the reference flaw signal at each received position. Thus, random noise cancels each other out, and the S/N ratio of the flaw signal will be improved. If the fourth flaw signal RW4 is used as the reference, the third flaw signal RW3 is delayed by the delay time ΔT1 and is added. Consequently, random noise cancels each other out, and the flaw signals, the phases of which are aligned, intensify each other. Thus, the S/N ratio of the flaw signal becomes higher than before the aperture synthesis process is performed. Moreover, by performing the aperture synthesis process by calculating the delay time at the position of the ultrasonic probe 11 and at each depth position of the steel plate SP, it is possible to detect a flaw signal at a high S/N ratio, regardless of the depth of a flaw in the steel plate SP.

Received Sound Pressure Ratio Calculation Process and Optimal Combined Width Calculation Process

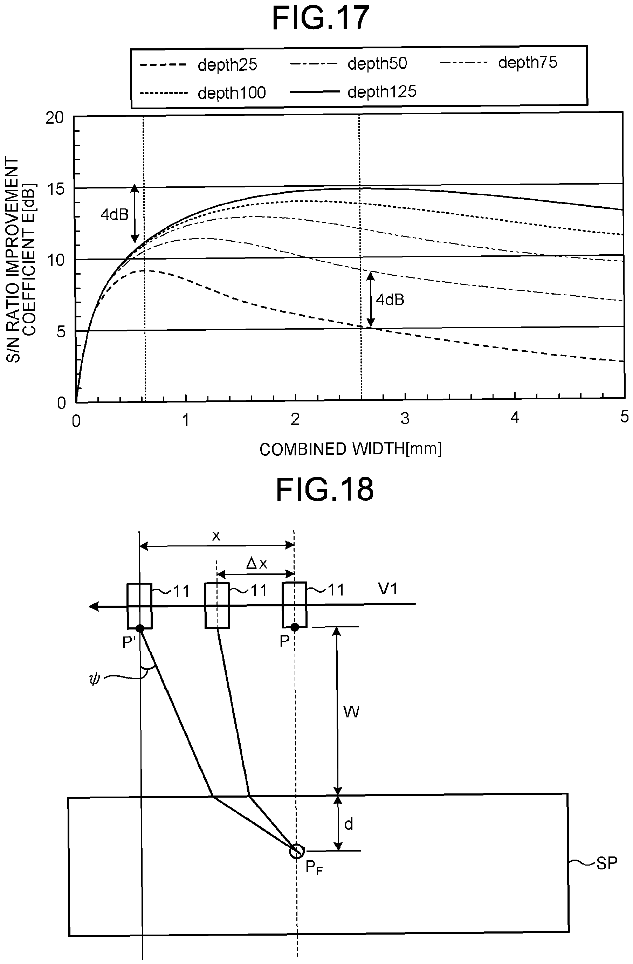

FIG. 17 is a diagram illustrating the results of simulating a relation between the combined width and the S/N ratio improvement coefficient E. More specifically, FIG. 17 indicates the results of simulating a relation between the combined width and the S/N ratio improvement coefficient E, when ultrasonic flaw detection is performed on the steel plate SP with a sheet thickness of 150 mm, while moving a round ultrasonic probe with a diameter of 12.6 mm and a frequency of 5 MHz in the width direction of the steel plate SP at a pitch of 0.05 mm, and the aperture synthesis process is performed on the internal flaws located at depths of 25, 50, 75, 100, and 125 mm (depths 25, 50, 75, 100, and 125). As illustrated in FIG. 17, the combined width that maximizes the S/N ratio improvement coefficient E differs at each depth position, and when the combined width is fixed to 0.8 and 2.6 mm at every depth position, compared to when the optimal combined width is set at every depth position, the S/N ratio is reduced by 4 dB at maximum. However, the combined widths 0.8 and 2.6 mm are the optimal values of the combined width when the aperture synthesis process is performed at the depths 25 and 125 mm.

FIG. 18 is a schematic diagram for explaining an optimal combined width calculation process, which is the second embodiment of the present invention. In the present embodiment, the directional angle ψ of an ultrasonic signal is calculated from the propagation path of the ultrasonic signal calculated in the propagation path calculation process; a change in the received sound pressure ratio of a flaw signal, when the positional relation between the ultrasonic probe 11 and the flaw is changed, is calculated; and the combined width is calculated from the distribution of the received sound pressure ratio. In this example, V1 indicates the moving speed of the ultrasonic probe 11 in the width direction, Vs indicates the sound speed in the steel plate SP, f indicates the PRF of the ultrasonic probe 11, F indicates the frequency of the ultrasonic probe 11, D indicates the length of the ultrasonic probe 11 (radius when the ultrasonic probe 11 is formed in a round shape, and the side length when the ultrasonic probe 11 is formed in a rectangular shape), W indicates the distance between the ultrasonic probe 11 and the surface of the steel plate SP, Vw indicates the sound speed in the water, which is the medium in the water immersion flaw detection method, $P_F$ indicates the assumed flaw position on the center axis of the ultrasonic probe 11, d indicates the depth of the assumed flaw position $P_F$ from the steel plate SP surface, P' indicates the position of the ultrasonic probe 11 when the ultrasonic probe 11 has moved from the initial position P by x, and ψ indicates an angle (directional angle) between the propagation path of the ultrasonic signal and the center axis of the ultrasonic probe 11 when the propagation path calculation process is performed on the position P' of the ultrasonic probe 11 and the assumed flaw position $P_F$.

Basically, the received sound pressure is calculated by assuming a far sound field, and the assumed flaw position $P_F$ needs to satisfy the expression (11) described above. In this example, the near sound field limit distance x0 is represented by the expression (12) described above. However, if the assumed flaw position $P_F$ does not satisfy the expression (11) described above, the combined width may also be calculated by obtaining the sound pressure in the near sound field.

If the ultrasonic probe 11 is formed in a round shape, the ratio (received sound pressure ratio) R of the received sound pressure of a flaw signal at the position P' with respect to the received sound pressure of a flaw signal at the position P can be represented by the expressions (13) to (15) described above, using the directional angle ψ. On the other hand, when the ultrasonic probe 11 is formed in a rectangular shape, the received sound pressure ratio R can be represented by the expressions (13), (15), and (16) described above, using the directional angle ψ.

In the present embodiment, the combined width is calculated using the received sound pressure ratio R calculated using the procedures described above. More specifically, the ultrasonic probe 11 receives a flaw signal every time the ultrasonic probe 11 moves the position by Δx. The moving pitch Δx is represented by the following expression (22).

$$\Delta x = \frac{V1}{f} \qquad (22)$$

The post-aperture synthesis received sound pressure ratio S is acquired by performing the aperture synthesis process in which the delay time is multiplied by the flaw signal acquired within a range where the position of the ultrasonic probe 11 has moved from $-n_1\Delta x$ to $n_2\Delta x$, and is added and averaged. The post-aperture synthesis received sound pressure ratio S is represented by the following expression (23). In the expression (23), R(nΔx) indicates the received sound pressure ratio at the position where the ultrasonic probe 11 has moved from the position P by $n\Delta x$. The position P of the ultrasonic probe 11 is not only set on the center axis of the ultrasonic probe 11, and may be set according to the flaw detection conditions.

$$S = \sum_{n=-n1}^{n2} \frac{R(n\Delta x)}{n1 + n2 + 1} \tag{23}$$

If it is assumed that the noise becomes $1/N^{1/2}$ by adding and averaging the number of times of addition N (= $n_1 + n_2 + 1$), the S/N ratio improvement coefficient E after the aperture synthesis process is performed with respect to the S/N ratio at the position P of the ultrasonic probe 11 is represented by the expression (19) described above.

Thus, by setting the combined width N that maximizes the S/N ratio improvement coefficient E by the expression (19), and performing the aperture synthesis process, it is possible to maximize the S/N ratio of the flaw signal. Moreover, by determining the number of times of addition N that satisfies the expression (20) described above, and performing the aperture synthesis process, it is possible to sufficiently improve the S/N ratio of the flaw signal. Similar to the first embodiment, it is preferable to correct the intensity, which is reduced by the aperture synthesis process, to the intensity before the process is performed.

The embodiments to which the invention made by the present inventors is applied have been described. However, the present invention is not limited to the description and the drawings that form a part of the disclosure of the present invention according to the present embodiments. For example, the present invention may be applicable as an inspection device that configures a manufacturing equipment line for a steel material, and a flaw may be detected by inspecting the inside of a steel material manufactured by a manufacturing device, through the ultrasonic flaw detection device according to the present invention. The present invention may also be applied as a step of inspecting included in the manufacturing method for a steel material, and may detect a flaw by inspecting the inside of a steel material manufactured at the step of manufacturing. At the step of detecting a flaw, a flaw inside a steel material is detected on the basis of the results of the aperture synthesis process at the step of inspecting, and the results such as the presence of a flaw, the position of the flaw, the size of the flaw, and the like are obtained.

Moreover, quality assurance for a steel material may also be performed by applying the present invention to a quality assurance method for a steel material, and detecting a flaw by inspecting the inside of the steel material. More specifically, it is possible to perform quality assurance for a steel material by detecting a flaw inside a steel material at the step of detecting a flaw in the present invention, and from the results of flaw detection obtained at the step of detecting a flaw. At the step of detecting a flaw, a flaw inside a steel material is detected on the basis of the results of the aperture synthesis process at the step of inspecting, and results such as the presence of a flaw, the position of the flaw, the size of the flaw, and the like are obtained. At the following step of quality assuring, on the basis of the results relating to the presence of a flaw, the position of the flaw, and the size of the flaw, which are obtained at the step of detecting a flaw, the quality of the steel material is assured by determining whether the manufactured steel material satisfies the criteria specified in advance. In this manner, the other embodiments, examples, operating technologies, and the like that may be made by those skilled in the art on the basis of the present embodiments are all included in the scope of the present invention.

Industrial Applicability

According to the present invention, it is possible to provide the ultrasonic flaw detection method and the ultrasonic flaw detection device that can execute ultrasonic flaw detection with high detection capability and resolution capability at each depth of an inspection material, by performing the aperture synthesis process using the theoretically determined combined width without using an experimental or empirical determination method. Moreover, according to the present invention, it is possible to provide the manufacturing equipment line for a steel material and the manufacturing method for a steel material that can manufacture a steel material with a good yield. Furthermore, according to the present invention, it is possible to provide a quality assurance method for a steel material that can provide a high quality steel material.

Reference Signs List

1    ultrasonic flaw detection device
11   ultrasonic probe

12    probe head
13    mounting table
14    rotation drive device
15    pulser
16    receiver
17    A/D converter
18    recording device
19    signal processing device
20    display device
RB    round bar

**Claims**

1.  An ultrasonic flaw detection method for inspecting an inside of an inspection material, comprising:

    transmitting an ultrasonic signal from an ultrasonic probe to the inspection material;
    receiving the ultrasonic signal reflected inside the inspection material via the ultrasonic probe as a flaw signal;
    a receiving step of receiving a plurality of the flaw signals via the ultrasonic probe while changing a positional relation between the inspection material and the ultrasonic probe;
    a determining step of, in each positional relation between the inspection material and the ultrasonic probe:

       calculating a ratio of a received sound pressure of a flaw signal with respect to a received sound pressure of a flaw signal at a reference position as a received sound pressure ratio; and
       determining a combined width in an aperture synthesis process at each depth position of the inspection material based on the calculated received sound pressure ratio; and

    a step of inspecting the inside of the inspection material by executing the aperture synthesis process using the flaw signals according to the determined combined width.

2.  The ultrasonic flaw detection method according to claim 1, wherein the determining step includes:

    calculating a change rate of an S/N ratio of a flaw signal acquired through the aperture synthesis process from a change rate of the received sound pressure ratio; and
    determining a combined width that makes the change rate of the S/N ratio of the flaw signal to be a predetermined value or more, as the combined width in the aperture synthesis process.

3.  The ultrasonic flaw detection method according to claim 1 or 2, wherein the determining step includes:

    calculating a received sound pressure ratio R using a directional angle $\psi$ of an ultrasonic signal using following expression (1) and expression (2) when the ultrasonic probe is a round-shaped ultrasonic probe; and
    calculating a received sound pressure ratio R using a directional angle $\psi$ of an ultrasonic signal using following expression (1) and expression (3) when the ultrasonic probe is a rectangular-shaped ultrasonic probe:

$$R = Dc^2(\varphi) \qquad\qquad (1)$$

$$Dc(\varphi) = \frac{2J_1(m)}{m} \qquad\qquad (2)$$

$$Dc(\varphi) = \frac{\sin m}{m} \qquad\qquad (3)$$

    where a parameter m in the expression (2) and expression (3) is a coefficient determined by the directional angle $\psi$.

4. The ultrasonic flaw detection method according to any one of claims 1 to 3, wherein the inspecting step includes correcting intensity of a flaw signal A obtained through the aperture synthesis process using following expressions (4) and (5), by dividing the flaw signal A by a post-aperture synthesis received sound pressure ratio S obtained by adding and averaging received sound pressure ratios $R_n$ (n = 0 to N) for the number of N:

$$B = \frac{A}{S} \qquad (4)$$

$$S = \sum_{n=0}^{N} \frac{R_n}{N+1} \qquad (5).$$

5. The ultrasonic flaw detection method according to any one of claims 1 to 4, wherein the determining step includes:

setting an incident range of any ultrasonic signal in the inspection material from a positional relation between the ultrasonic probe and a depth position of an internal flaw;
calculating a propagation path of the ultrasonic signal within the set incident range of the ultrasonic signal based on Snell's law;
calculating a propagation path of the ultrasonic signal with respect to each depth position of the internal flaw by repeating a calculation of determining whether the propagation path of the ultrasonic signal passes through the internal flaw by a coordinate calculation; and
calculating delay times of the flaw signals required for the aperture synthesis process based on the propagation path of the ultrasonic signal with respect to each calculated depth position.

6. The ultrasonic flaw detection method according to any one of claims 1 to 4, wherein the determining includes:

setting an incident range of any ultrasonic signal in the inspection material from a positional relation between the ultrasonic probe and a depth position of an internal flaw;
calculating a propagation path of the ultrasonic signal with respect to each depth position of the internal flaw by repeating a calculation of determining whether an angle between a normal line of the inspection material at an incident point of the ultrasonic signal within the set incident range of the ultrasonic signal and a line segment connecting the ultrasonic probe and the incident point of the ultrasonic signal, and an angle between the normal line and a line segment connecting an assumed flaw position and the incident point of the ultrasonic signal satisfy Snell's law; and
calculating delay times of the flaw signals required for the aperture synthesis process based on the propagation path of the ultrasonic signal with respect to each calculated depth position.

7. An ultrasonic flaw detection device for inspecting an inside of an inspection material by transmitting an ultrasonic signal from an ultrasonic probe to the inspection material, and receiving the ultrasonic signal reflected inside the inspection material via the ultrasonic probe as a flaw signal, the ultrasonic flaw detection device comprising:

a reception unit configured to receive a plurality of the flaw signals via the ultrasonic probe while changing a positional relation between the inspection material and the ultrasonic probe;
a determination unit configured to, in each positional relation between the inspection material and the ultrasonic probe:

calculate a ratio of a received sound pressure of a flaw signal with respect to a received sound pressure of a flaw signal at a reference position as a received sound pressure ratio; and
determine a combined width in an aperture synthesis process at each depth position of the inspection material based on the calculated received sound pressure ratio; and

an inspection unit configured to inspect the inside of the inspection material by executing the aperture synthesis process using the flaw signals according to the determined combined width.

8. A manufacturing equipment line for a steel material, the manufacturing equipment line comprising:

a manufacturing device configured to manufacture a steel material; and
the ultrasonic flaw detection device according to claim 7 configured to inspect an inside of the steel material manufactured by the manufacturing device.

9. A manufacturing method for a steel material, the manufacturing method comprising:

a manufacturing step of manufacturing a steel material; and
a detecting step of detecting a flaw inside the steel material manufactured at the manufacturing step by using the ultrasonic flaw detection method according to any one of claims 1 to 6.

10. A quality assurance method for a steel material, the quality assurance method comprising:

a detecting step of detecting a flaw inside a steel material by using the ultrasonic flaw detection method according to any one of claims 1 to 6; and
a quality assuring step of quality assuring the steel material from a flaw detection result obtained at the step of detecting a flaw.

# FIG.1

# FIG.2

APERTURE
SYNTHESIS
PROCESS

FLAW DETECTION
CONDITIONS INPUT — S1

PROPAGATION PATH
CALCULATION — S2

DELAY TIME CALCULATION — S3

RECEIVED SOUND PRESSURE
RATIO CALCULATION — S4

OPTIMAL COMBINED
WIDTH CALCULATION — S5

END

# FIG.3

# FIG.4

# FIG.5

EP 3 985 387 A1

# FIG.6

# FIG.7

# FIG.8

```
    ┌─────────────────────────┐
    │  OPTIMAL COMBINED       │
    │  WIDTH CALCULATION      │
    │  PROCESS                │
    └─────────────────────────┘
                │
                ▼
    ┌─────────────────────────┐
    │   SET COMBINED WIDTH    │──S51
    └─────────────────────────┘
                │
                ▼
    ┌─────────────────────────┐
    │ CALCULATE RECEIVED SOUND│──S52
    │ PRESSURE RATIO CHANGE RATE│
    └─────────────────────────┘
                │
                ▼
    ┌─────────────────────────┐
    │ CALCULATE S/N RATIO CHANGE│──S53
    │ RATE                    │
    └─────────────────────────┘
                │
                ▼
    ┌─────────────────────────┐
    │ DETERMINE WHETHER CONDITIONS│──S54
    │ ARE MET                 │
    └─────────────────────────┘
                │
                ▼
    ┌─────────────────────────┐
    │ DETERMINE COMBINED WIDTH│──S55
    └─────────────────────────┘
                │
                ▼
    ┌─────────────────────────┐
    │          END            │
    └─────────────────────────┘
```

# FIG.9

# FIG.10

# FIG.11

(a)

ROTATION DIRECTION[deg]

← SURFACE ECHO

DEPTH DIRECTION[mm]

(b)

# FIG.12

(a)

(b)

# FIG.13

PULSER 15

RECEIVER 16

A/D CONVERTER 17

DISPLAY DEVICE 20

RECORDING DEVICE 18

SIGNAL PROCESSING DEVICE 19

13

12

11

SP

21

# FIG.14

# FIG.15

FIG.16

# FIG.17

Legend: - - - depth25   - · - · depth50   - · · - depth75   · · · · depth100   —— depth125

Y-axis: S/N RATIO IMPROVEMENT COEFFICIENT E[dB]

X-axis: COMBINED WIDTH[mm]

# FIG.18

**INTERNATIONAL SEARCH REPORT**

| International application No. |
| --- |
| PCT/JP2019/023485 |

A. CLASSIFICATION OF SUBJECT MATTER
Int. Cl. G01N29/50(2006.01)i

According to International Patent Classification (IPC) or to both national classification and IPC

B. FIELDS SEARCHED

Minimum documentation searched (classification system followed by classification symbols)
Int. Cl. G01N29/00-29/52

Documentation searched other than minimum documentation to the extent that such documents are included in the fields searched
Published examined utility model applications of Japan    1922-1996
Published unexamined utility model applications of Japan   1971-2019
Registered utility model specifications of Japan          1996-2019
Published registered utility model applications of Japan  1994-2019

Electronic data base consulted during the international search (name of data base and, where practicable, search terms used)
JSTPlus (JDreamIII)

C. DOCUMENTS CONSIDERED TO BE RELEVANT

| Category* | Citation of document, with indication, where appropriate, of the relevant passages | Relevant to claim No. |
| --- | --- | --- |
| A | JP 2018-44876 A (JFE STEEL CORP.) 22 March 2018 (Family: none) | 1-10 |
| A | US 4481822 A (HITACHI, LTD.) 13 November 1984 (Family: none) | 1-10 |
| A | JP 2010-266414 A (CENTRAL RESEARCH INSTITUTE OF ELECTRIC POWER INDUSTRY) 25 November 2010 (Family: none) | 1-10 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 08.08.2019 | 27.08.2019 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**EP 3 985 387 A1**

<table>
<tr><td colspan="3" align="center">INTERNATIONAL SEARCH REPORT</td><td>International application No.<br>PCT/JP2019/023485</td></tr>
<tr><td colspan="4">C (Continuation).   DOCUMENTS CONSIDERED TO BE RELEVANT</td></tr>
<tr><td>Category*</td><td colspan="2">Citation of document, with indication, where appropriate, of the relevant passages</td><td>Relevant to claim No.</td></tr>
<tr><td>A</td><td colspan="2">パドウングスリボウオーン ウオラウイット,他, AWS-SAFT 超音波画像化法における有効探傷範囲の決定方法の提案, 第 22 回超音波による非破壊評価シンポジウム講演論文集, 29 January 2015, pp. 1-4, non-official translation (WORAWIT, Padungsriborworn et al. Proposal for Method of Determining Valid Flaw Detection Range of AWS-SAFT Ultrasonic Imaging Methods. Proceedings of 22nd NDE of Ultrasonic Testing.)</td><td>1-10</td></tr>
</table>

Form PCT/ISA/210 (continuation of second sheet) (January 2015)

35

**EP 3 985 387 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005233874 A